Europäisches Patentamt

European Patent Office

Office européen des brevets

(11) Veröffentlichungsnummer: **0 056 968**

**A1**

(12) # EUROPÄISCHE PATENTANMELDUNG

(21) Anmeldenummer: 82100315.9

(22) Anmeldetag: 18.01.82

(51) Int. Cl.³: **G 02 B 5/08**

(30) Priorität: 22.01.81 DE 3101891

(43) Veröffentlichungstag der Anmeldung:
04.08.82 Patentblatt 82/31

(84) Benannte Vertragsstaaten:
AT BE CH DE FR GB IT LI

(71) Anmelder: Johnsen, Andreas O., Dr.
Haydnstrasse 33
D-6103 Griesheim(DE)

(72) Erfinder: Johnsen, Andreas O., Dr.
Haydnstrasse 33
D-6103 Griesheim(DE)

(54) **Spiegelvorrichtung.**

(57) Die Erfindung betrifft eine Spiegelvorrichtung zur seitenrichtigen Wiedergabe darin gespiegelter Objekte unter Verwendung zweier identischer Spiegel mit ebenen reflektierenden Flächen, die mindestens eine gerade Begrenzung besitzen, in symmetrischer Anordnung, gegebenenfalls unter Verwendung von Halterungselementen, wobei die reflektierenden Flächen (3) und (4) der beiden identischen Spiegel (1) und (2) so gefügt oder unter Verwendung von Halterungselementen fixierbar sind, daß sie möglichst exakt einen rechten Winkel bilden, und die reflektierenden Flächen (3) und (4) möglichst ohne Übergang aufeinandertreffen.

EP 0 056 968 A1

Spiegelvorrichtung

Die Erfindung betrifft eine Spiegelvorrichtung zur seitenrichtigen
Wiedergabe in ihr gespiegelter Objekte. Spiegel werden definiert
als: "Eine glatte Fläche, die einen wesentlichen Teil des auffallenden Lichtes nach dem Reflexionsgesetz zurückwirft und dem
Betrachter ein virtuelles, nicht auf einem Schirm auffangbares
Spiegelbild bietet, das den Gegenstand seitenverkehrt zeigt".
(Vergl.: Der große Brockhaus, 11. Band, F.A.Brockhaus Wiesbaden,
  1957, S. 100).

Die Verwendung von Spiegeln, zunächst aus poliertem Metall, läßt
sich recht früh in der Kulturgeschichte der Menschheit nachweisen.
Später fand man die Verspiegelung von Oberflächen, insbesondere
von Glas und noch später von Kunststoff.
Mit dem Aufkommen der Technik wurde das Prinzip der Spiegelung des
Lichts an reflektierenden Oberflächen in vielfacher Weise technisch angewendet.
Spiegel gehören zum Alltagsleben des zivilisierten Menschen, wobei
die seitenverkehrte Wiedergabe des Gegenstands, weil unmittelbar
auf physikalischen Gesetzen beruhend, eben in Kauf genommen wird.

Es wurde nun eine Spiegelvorrichtung unter Verwendung zweier
identischer Spiegel mit ebenen reflektierenden Flächen, die mindestens eine gerade Begrenzung besitzen in symmetrischer Anordnung
gefunden, die eine seitenrichtige Wiedergabe gespiegelter Objekte
gewährleisten.
Bei der erfindungsgemäßen Spiegelvorrichtung, die außerdem noch
Halterungselemente aufweisen kann, sind die reflektierenden
Flächen (3) und (4) der beiden identischen Spiegel (1) und (2) so
gefügt oder sind unter Verwendung von Halterungselementen so
fixierbar, daß sie exakt einen rechten Winkel bilden und die
reflektierenden Flächen (3) und (4) möglichst ohne Übergang aufeinandertreffen.
Überwiegend wird es sich bei den Spiegeln (1) und (2) um rechteckige bzw. quadratische Ausführungen handeln und überwiegend werden die reflektierenden Flächen (3) und (4) mit den Flächen
der Spiegel (1) und (2) deckungsgleich sein. Es sind jedoch auch
andere geometrische Formen möglich. Beispielsweise solche, bei
denen sich die beiden Spiegel (1) und (2) zu einer Rundform, einer
Herzform, einer Sechseckform o.ä. ergänzen.

Abweichungen von den oben genannten Merkmalen der Fügung unter
einem rechten Winkel und des Aufeinandertreffens der reflektierenden Flächen (3) und (4) ohne Übergang, d.h. in möglichster
Annäherung an die ideale Geometrie und ohne erkennbare Fuge,
führen zu Störungen des Spiegelbildes.

Eine Ausführungsart der erfindungsgemäßen Spiegelvorrichtung
stellt der Fall dar, daß die reflektierenden Flächen (3) und (4)
mit den Oberflächen der Spiegel (1) und (2) zusammenfallen. Dies
läßt sich z.B. bei Ausführungen aus Metall erreichen, wobei die
Oberflächen z.B. poliert, oberflächenvergütet, platiert, metallbeschichtet (verchromt) oder in sonstiger Weise als Spiegel ausgestattet sein können.

Die reflektierenden Flächen können ihrerseits mit einem transparenten Überzug, beispielsweise auf Kunststoffbasis, versehen sein,
wobei Inhomogenitäten tunlichst zu vermeiden sind.
Es können auch in an sich bekannter Weise reflektierend beschichtete Scheiben aus Silikat- oder organischem Glas oder sonstigem
Kunststoff, oder sonstigen brauchbaren Materialien mit hinreichend
glatter Oberflächenbeschaffenheit verwendet werden. Über der
reflektierenden Schicht kann vorteilhaft eine transparente, zweckmäßig kratzfeste Beschichtung aufgebracht sein. Die Beschichtung
kann z.B. aus Kunststoff, siliciumorganischen Kondensaten, aufgedampftem $SiO_2$ je nach Art und Beschaffenheit der reflektierenden
Schicht und der Trägerschicht bestehen. Wie aus dem Vorstehenden
hervorgeht, können die Merkmale, die beiden Spiegel (1) und (2)
betreffend, auch bei einstückiger Ausführung derselben eingestellt
werden.

Es können aber auch Spiegel des heute überwiegend verwendeten Typs eingesetzt werden, bei denen die reflektierenden Flächen (3) und (4) identisch sind mit der rückwärtigen Oberfläche von Platten aus organischem oder Silikatglas (wobei in der Regel noch eine rückwärtige Deckschicht aufgebracht worden ist) die dann die Spiegel (1) und (2) darstellen.

Zum Fügen von Platten aus Kunststoff unter einem Winkel von 90° in Gehrung eignet sich besonders das in der DE-PS 23 48 027 angegebene Verfahren.

Bei der Fügung der Kunststoffplatten, aus denen die Spiegel (1) und (2) in den angegebenen Fällen bestehen, ist darauf zu achten, daß keine Grenzflächen bestehen bleiben und daß Inhomogenitäten soweit wie möglich vermieden werden.

Im Interesse einer möglichst einwandfreien optischen Wiedergabe von gespiegelten Objekten sollte im Idealfall die Bedingung erfüllt sein, daß Licht, das von einer in der Ebene der Winkelhalbierenden des von den reflektierenden Flächen (3) und (4) gebildeten rechten Winkels befindlichen punktförmigen Lichtquelle (als einziger Lichtquelle) ausgeht, beim Auftreffen an spiegelbildlich entsprechenden Punkten der reflektierenden Flächen (3) und (4) die gleiche Intensität besitzt.

Dies gilt z.B. für den Fall, daß die erfindungsgemäße Vorrichtung ein Prisma aus transparentem Material darstellt, dessen unter 90° angeordnete Seitenflächen als reflektierende Flächen (3) und (4) ausgebildet sind. Sofern die Spiegel der erfindungsgemäßen Vorrichtung nicht einstückig ausgeführt sind, können übliche Fügeverfahren wie z.B. Kleben angewendet werden.

Die beiden identischen Spiegel (1) und (2) müssen mit Sorgfalt gefügt sein, damit der geforderte Winkel von 90° exakt eingestellt und ein möglichst idealer Stoß erreicht wird. Spiegel des heute vorherrschenden Typs können beispielsweise unter Gehrung gefügt werden, wobei jede optische Inhomogenität zu vermeiden ist. Dies ist z.B. beim Fügen von Spiegeln aus organischen Gläsern, wie z.B. Acrylglas mit den Mitteln des Standes der Technik ohne allzu große Schwierigkeiten zu erreichen.

Eine andere Möglichkeit, die aber auch sorgfältiger Ausführung bedarf, besteht darin, die beiden Spiegel (1) und (2) durch geeignete Halterungselemente so zu fixieren, daß die geforderten Merkmale erfüllt sind.

Die Spiegel können über ihre Ränder oder von der Rückseite her in der gewünschten Position befestigt werden. Im ersten Fall wird in der Regel eine Rahmenkonstruktion, im letzteren Falle zumindest geeignet arrangierte, unterstützende Flächen vorhanden sein müssen.

Bei einer besonders interessanten Art der Ausführung werden die identischen Spiegel (1) und (2) bei Bedarf in der den Merkmalen des Hauptanspruches entsprechenden Art fixiert. Dabei sind beispielsweise die Spiegel (1) und (2) so gehaltert, daß einer von ihnen oder beide derart um eine Achse gedreht werden können, daß am Endpunkt der erlaubten Drehung beide Spiegel im rechten Winkel zueinanderstehen und die reflektierenden Flächen (3) und (4) möglichst ohne Übergang aufeinandertrefffen.

Bei Anwendung des zuletzt genannten Prinzips können z.B. bei Toilettenschränken benachbarte Spiegelflächen (die normalerweise als ebene Spiegelflächen Gegenstände seitenverkehrt wiedergeben) in die erfindungsgemäße Spiegelvorrichtung überführt und bei Bedarf wieder in die ebene Position zurückgeführt werden.

Die ideale, völlig störungsfreie Benutzung der erfindungsgemäßen Vorrichtung ist dann gegeben, wenn die gedachte Ebene durch die Winkelhalbierenden des von den reflektierenden Flächen (3) und (4) gebildeten rechten Winkels als Symmetrieebene zwischen den Augen des Betrachters hindurch verläuft.

Die erfindungsgemäße Vorrichtung gestattet das mühelose Lesen gespiegelter Information, z.B. von Texten, Bildern, Landkarten. Die Beobachtung von Vorgängen im Rücken des Betrachters, die dann seitenrichtig in der Vorrichtung gespiegelt werden, ist z.B. möglich, wenn die Vorrichtung in geeigneter Weise über dem Kopf des Betrachters angebracht wird.

Ein wichtiges Anwendungsgebiet liegt naturgemäß auf dem kosmetischen Sektor. So bieten sich besonders Ecken von Räumen zum
Anbringen der erfindungsgemäßen Spiegelvorrichtung an. Wichtig
ist weiter die Verwendung als Hilfsmittel beim Display von
Objekten.

"Spiegelvorrichtung"

## Schutzansprüche

1. Spiegelvorrichtung zur seitenrichtigen Wiedergabe darin gespiegelter Objekte unter Verwendung zweier identischer Spiegel mit ebenen reflektierenden Flächen, die mindestens eine gerade Begrenzung besitzen, in symmetrischer Anordnung, gegebenenfalls unter Verwendung von Halterungselementen,

   dadurch gekennzeichnet,

   daß die reflektierenden Flächen (3) und (4) der beiden identischen Spiegel (1) und (2) so gefügt oder unter Verwendung von Halterungselementen fixierbar sind, daß sie möglichst exakt einen rechten Winkel bilden, und die reflektierenden Flächen (3) und (4) möglichst ohne Übergang aufeinandertreffen.

2. Spiegelvorrichtung gemäß Anspruch 1, dadurch gekennzeichnet, daß der Stoß (5), an dem die beiden geradlinigen Begrenzungen der reflektierenden Flächen (3) und (4) zusammentreffen, die größtmögliche Annäherung an einen idealen rechten Winkel besitzt.

3. Spiegelvorrichtung gemäß den Ansprüchen 1 und 2, dadurch gekennzeichnet, daß Licht, das von einer in der Ebene der Winkelhalbierenden des von den reflektierenden Flächen (3) und (4) gebildeten rechten Winkels befindlichen punktförmigen Lichtquelle ausgeht, beim Auftreffen an einander spiegelbildlich entsprechenden Punkten der reflektierenden Flächen (3) und (4) die gleiche Intensität besitzt.

4. Spiegelvorrichtung gemäß den Ansprüchen 1 bis 3, dadurch gekennzeichnet, daß sich die reflektierenden Flächen (3) und (4) möglichst nahe den Oberflächen der identischen Spiegel (1) und (2) befinden.

5. Spiegelvorrichtung gemäß den Ansprüchen 1 bis 4, dadurch gekennzeichnet, daß sich die reflektierenden Flächen (3) und (4) an den Oberflächen der identischen Spiegel (1) und (2) befinden.

6. Spiegelvorrichtung gemäß den Ansprüchen 1 bis 4, dadurch gekennzeichnet, daß sich die reflektierenden Flächen (3) und (4) auf der Unterseite einer transparenten Platte aus organischem oder Silikat-Glas befinden.

7. Spiegelvorrichtung gemäß den Ansprüchen 1 bis 6, dadurch gekennzeichnet, daß die identischen Spiegel (1) und (2) in Form von Platten an den zu fügenden Kanten auf Gehrung zugeschnitten und dann verklebt werden.

8. Spiegelvorrichtung gemäß Anspruch 7, dadurch gekennzeichnet, daß die Verklebung gemäß der DE-AS 23 48 027 durchgeführt wird.

9. Spiegelvorrichtung gemäß den Ansprüchen 1 bis 8, dadurch gekennzeichnet, daß die beiden identischen Spiegel (1) und (2) eine rechteckige bzw. quadratische Fläche besitzen.

10. Spiegelvorrichtung gemäß den Ansprüchen 1 bis 9, dadurch gekennzeichnet, daß die beiden identischen Spiegel (1) und (2) mittels einer Rahmenkonstruktion gehaltert werden.

11. Spiegelvorrichtung gemäß den Ansprüchen 1 bis 10, dadurch gekennzeichnet, daß die Vorrichtung Teil eines Toilettenschrankes ist.

12. Spiegelvorrichtung gemäß den Ansprüchen 1 bis 11, dadurch gekennzeichnet, daß die Vorrichtung eine transparente, optisch homogene, nicht-spiegelnde Abdeckung besitzt.

0056968

1/1

90°

0056968

Nummer der Anmeldung

EP 82 10 0315.9

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 588 765 (F. LEHEL)<br>* Ansprüche *<br>-- | 1-8 |
| X | FR - A - 953 115 (BABIER)<br>* Seite 2 *<br>-- | 1-3,9 |
| A | US - A - 3 022 709 (L.M. DUGGAN)<br>* Fig. *<br>-- | 10 |
| A | AT - B - 26 767 (A. BREARD)<br>* ganzes Dokument *<br>-- | |
| A | FR - A - 757 529 (P. DE VITRY<br>D'AVANCOURT)<br>* ganzes Dokument *<br>---- | |

### KLASSIFIKATION DER ANMELDUNG (Int Cl.³)

G 02 B    5/08

### RECHERCHIERTE SACHGEBIETE (Int. Cl.³)

G 02 B    5/08

### KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| | Der vorliegende Recherchenbericht wurde für alle Patentansprüche erstellt. |
|---|---|

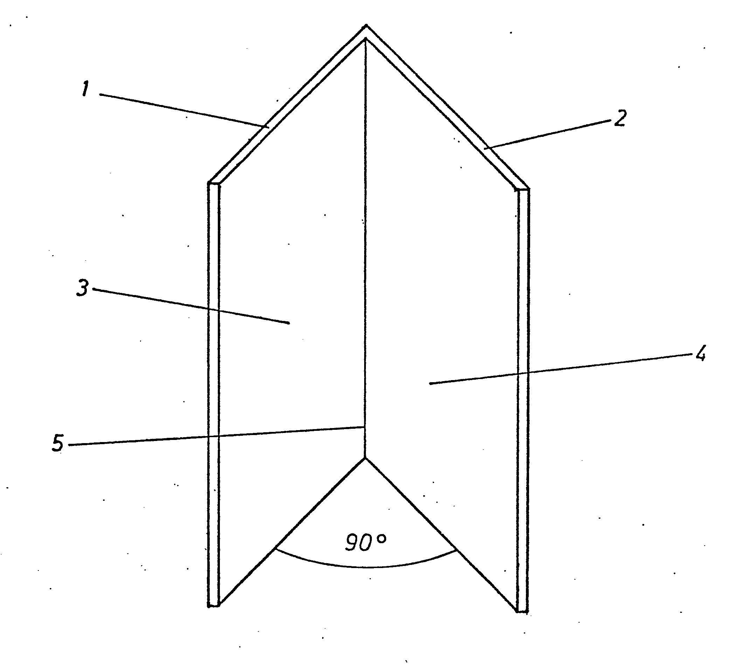

| Recherchenort | Abschlußdatum der Recherche | Prüfer |
|---|---|---|
| Berlin | 26-03-1982 | FUCHS |

EPA form 1503.1   06.78